# EUROPÄISCHE PATENTSCHRIFT

(11) **EP 2 550 119 B1**
(45) Veröffentlichungstag und Bekanntmachung des Hinweises auf die Patenterteilung: **13.03.2019**
(21) Anmeldenummer: 11700795.5
(22) Anmeldetag: 11.01.2011
(51) Int. Cl.: B21G 1/12, B65G 15/14, B65G 19/02

(54) **SYSTEM MIT LÄNGLICHEN WERKSTÜCKEN UND EINER TRANSPORTVORRICHTUNG ZU DEREN VEREINZELTEN ÜBERFÜHRUNG**
SYSTEM WITH ELONGATED ELEMENTS AND A TRANSPORT DEVICE FOR FEEDING THEM ONE BY ONE
SYSTÈME AVEC DES ÉLÉMENTS ALLONGÉS ET UN DISPOSITIF DE TRANSPORT POUR LES ALIMENTER UN PAR UN

(30) Priorität: 24.03.2010 DE 102010012612
(43) Veröffentlichungstag der Anmeldung: 30.01.2013
(73) Patentinhaber: WAFIOS Aktiengesellschaft, 72764 Reutlingen/Württ. (DE)
(72) Erfinder: GÖDTNER, Werner, 42897 Remscheid (DE)
(74) Vertreter: Patentanwälte Geyer, Fehners & Partner mbB
(86) Internationale Anmeldenummer: PCT/EP2011/000080
(87) Internationale Veröffentlichungsnummer: WO 2011/116847

(56) Entgegenhaltungen:
- EP-A1- 0 407 656
- DD-A- 41 141
- DE-A1- 19 846 716

## Beschreibung

**Die Erfindung bezieht sich auf** ein System aus einer Transportvorrichtung und aus quer zu deren Längsrichtung zu überführenden vereinzelten länglichen Werkstücken mit einem Durchmesser aus einem vorgegebenen Durchmesserbereich, gemäß dem Oberbegriff des Anspruchs 1.

Solche Transportvorrichtungen werden z. B. in Maschinen zur Herstellung von Nägeln für den Transport der Nagelrohlinge eingesetzt.

Die gattungsgemäße DD 41 141 A1 schlägt ein Transportsystem für Nadeln, Drahtschäfte und dergleichen vor, bei dem ein endloses elastisches Transportband eingesetzt wird, auf dem aus zwei oder mehreren Backen bestehende elastische Klemmeinrichtungen angeordnet sind, in denen die Werkstücke festgespannt gehalten und an den Bearbeitungswerkzeugen vorbeigeführt werden. Die Beschickung der Klemmeinrichtungen erfolgt über kurvengesteuerte Werkstückzuführbolzen, die mit Federelementen versehen sind, welche die zuzuführenden Werkstücke erfassen, ausrichten und dann der Klemmeinrichtung zuführen. Mittels durch Kurvenscheibe gesteuerte Auswerferbolzen werden die Werkstücke aus den Klemmeinrichtungen schließlich wieder ausgestoßen.

Aus der EP 0 407 656 B1 ist eine in einer drahtverarbeitenden Stiftpresse verwendete Transportvorrichtung zum Überführen länglicher Werkstücke, wie Drahtstücke, bekannt, die mit zwei gegenläufig angetriebenen Zahnriemen arbeitet, wobei die zu transportierenden Werkstücke zwischen den einander zugewandten Seiten der Zahnriemen gehalten werden. Dabei müssen die Werkstücke, deren jedes in einer Aufnahme zwischen zwei vorspringenden Zähnen sitzt, durch das Zusammenwirken der Zahnriemen in ihrer jeweiligen Aufnahme gehalten werden. Dies bedingt, daß jeweils das geradlinige Trum beider Zahnriemen über spezielle Führungen geführt wird, weil die für das Festhalten der Werkstücke in ihrer jeweiligen Aufnahme erforderliche Druckanlage durch die beiden Zahnriemen in deren Zusammenwirken erzeugt werden muß. Diese bekannte Transportvorrichtung ist relativ kompliziert in ihrem Aufbau und ein Umstellen für den Transport von Werkstücken anderer Dicke ist zeitaufwendig. Zudem bedarf es für den Transport der gegenläufig angetriebenen Transportriemen eines Stirnradgetriebes, das einen Großteil der nutzbaren Leistung des einzusetzenden Schrittgetriebes benötigt, wodurch dieses entsprechend dimensioniert werden muß.

Die DE 31 43 269 A1 beschreibt ein Transportsystem für Werkstücke, bei dem zum Werkstücktransport ein Zahnriemen mit vorstehenden Zähnen auf der der Antriebsseite gegenüberliegenden Außenseite eingesetzt wird. Zwischen jeweils zwei Zähnen wird eine Ausnehmung gebildet, die zur Aufnahme der zu transportierenden Werkstücke dient. Dabei weisen die Zähne an ihren freien Enden mindestens an einer eine Aufnahme begrenzenden Seite einen zum benachbarten Zahn hinweisenden Vorsprung auf, der das aufgenommene Werkstück an der Außenseite der Aufnahme zumindest teilweise überdeckt. Dies verhindert, daß das Werkstück in geradlinig verlaufenden Abschnitten der Transportrichtung dieses bekannten Transportsystems aus der Aufnahme herausfallen kann, da es an der außen liegenden Öffnung der Aufnahme durch den am Ende zumindest eines der beiden seitlichen Zähne angebrachten Vorsprung überdeckt wird. Wenn der Zahnriemen jedoch über eine Umlenkrolle läuft, längs derer der Transportweg bogenförmig gekrümmt wird, wobei der Krümmungsmittelpunkt auf der den Aufnahmen gegenüberliegenden Seite des Zahnriemens liegt, liegen die auf der Vorderseite des Zahnriemens angeordneten Zähne nicht mehr parallel zueinander. Vielmehr spreizen sich die zwischen den Zähnen gebildeten Ausnehmungen so, daß sie, vom Zahnriemen ausgehend, nach außen verbreitert werden, wodurch sich der Abschnitt zwischen zwei Zähnen vergrößert und sich dadurch der Raum der Ausnehmung automatisch so öffnet, daß ein Werkstück in die Ausnehmung im wesentlichen radial zur Umlenkrolle eingelegt bzw. aus dieser entfernt werden kann. An einer anderen Umlenkrolle, z. B. auf der gegenüberliegenden Seite des Transportweges, etwa an deren Unterseite, kann die beim dortigen Spreizen der Zähne während des Umlaufs erfolgte Spreizung der Ausnehmungen dann dazu benutzt werden, die einzelnen Werkstücke etwa radial zur Umlenkrolle aus den gespreizten Ausnehmungen herausfallen zu lassen. Bei diesem bekannten Transportsystem ist es jedoch so, daß die Formausnehmungen zwischen jeweils zwei Zähnen nur für einen bestimmten Durchmesser der aufzunehmenden Werkstücke geeignet sind, wobei ein Transport anderer Werkstücke mit abweichendem Durchmesser jedoch nur innerhalb eines sehr kleinen Durchmesserbereiches erfolgen kann. Andere Werkstücke mit sehr großem Durchmesser können nicht aufgenommen werden, da sie dann trotzdem aus den Ausnehmungen herausfallen könnten, was gleichermaßen für Werkstücke gilt, die einen deutlich kleineren Durchmesser haben, wenn dieser aus der nur teilweise verschlossenen Öffnung der Aufnahme nach außen heraustreten kann. Will man also mit diesem bekannte Transportsystem Werkstücke sehr unterschiedlicher Durchmesser transportieren, ist es erforderlich, beim Werkstückwechsel gleich die ganzen Zahnriemen auszuwechseln, um einer entsprechend starken Abweichung im Durchmesser des zu transportierenden Werkstückes im Hinblick auf einen sicheren Transport Rechnung tragen zu können.

Die DE 198 46 714 C1 beschreibt eine Transportvorrichtung für längliche Werkstücke von einer Einführ- in eine Bearbeitungsstation mittels mindestens eines transportierenden Zahnriemens. Dabei sind an dem Zahnriemen auf dessen Außenseite halbkreisförmige Aufnahmen zum Einlegen der zu transportierenden Werkstücke vorgesehen. Die Einführ- und die Bearbeitungsstation sind jeweils an einem Umlenkrad für den Zahnriemen vorgesehen, wobei an der Einführstation an diesem Umlenkrad seitlich zwei Einbringräder angeflanscht sind, die ebenfalls halbkreisförmige Aufnahmen für die Werkstücke tragen. Diese Aufnahmen sind sowohl am Zahnriemen, wie auch an den Einbringrädern dem Durchmesser der zu überführenden Werkstücke angepaßt. Allerdings überragen die Einbringräder mit ihrem Außendurchmesser die über die Antriebszahnscheiben umgelenkten Bereiche des Zahnriemens. Unten werden parallel zur gemeinsamen Achse des Umlaufrades und der Einbringräder die Werkstücke vereinzelt von einer Zuführeinrichtung eingeführt. Der Zahnriemen wirkt mit einer stationären Führungsschiene zusammen, die etwas vom Zahnriemen beabstandet ist und eine waagerechte Gleitfläche sowie einen vorderen Endabschnitt aufweist, dessen Gleitfläche kreiszylindrisch ausgeformt ist und der koaxialen Einhüllenden der Antriebszahnriemenscheibe und der beiden Einbringräder folgt. Das in die unterste Aufnahme der Einbringräder eingeführte Werkstück wird auf der Gleitfläche des Endabschnittes der Führungsschiene in Längsrichtung von den Einführrädern eingeschoben und dort zwischen der Aufnahme und dem Endabschnitt der Führungsschiene eingeklemmt. Beim schrittweisen Weiterlaufen der Umlenkrolle gleitet das Werkstück mit einem äußeren Abschnitt solange auf dem Endabschnitt der Führungsschiene, bis es eine Stelle erreicht, an der sich jeweils zwei Aufnahmen der beiden Einbringräder vorübergehend mit einer Aufnahme des gleichzeitig von der Antriebsscheibe angetriebenen Zahnriemens treffen. Dort wird das in den Aufnahmen der Einbringräder enthaltene Werkstück von der Aufnahme des Zahnriemens übernommen und sodann weiterhin an der Gleitschiene anliegend über den geraden Abschnitt der Transportstrecke hinweg bis zu einer anderen Umlenkstelle transportiert. Auch bei dieser bekannten Transportvorrichtung können in die im Querschnitt halbkreisförmig ausgebildeten Aufnahmen am Zahnriemen zur Aufnahme der Werkstücke mit anderen als dem für die Aufnahmen eingesetzten Radius bei kleineren Radien nur schwer transportiert werden, da sie dann innerhalb der Aufnahmen seitlich verschwenken können, was unerwünscht ist. Ist der Durchmesser des zu transportierenden Werkstückes jedoch größer, dann kann die Schwierigkeit auftreten, daß bei einem deutlich größeren Durchmesser die Abstützung innerhalb der dann demgegenüber relativ kleinen Aufnahmen nicht mehr ausreichend ist, um auf der Transportstrecke einen ungestörten Transport vorzunehmen. Zudem muß der Abstand zwischen Schiene und Zahnriemen über die Länge der geradlinigen Transportstrecke hinweg gleich groß gehalten werden, um nicht ein Herauslaufen der einzelnen Werkstücke aus den Aufnahmen zu begünstigen und um im übrigen auch die Reibkräfte der an der Schiene gleitenden Werkstücke gleichmäßig und gering zu halten. Außerdem ist die Zuführung der Werkzeuge in die Aufnahmen aufwendig.

Eine ähnliche Transportvorrichtung zeigt auch die DE 198 46 716 C2. Allerdings wirkt hier im Unterschied zu der zuvor beschriebenen Transportvorrichtung das gespannte Trum des Zahnriemens zwischen den beiden Umlenkstationen mit einer nicht mehr geradlinigen, sondern einer zylindrisch zu den Aufnahmen hin gekrümmten Schiene zusammen, was den Vorteil mit sich bringt, daß die Einklemmung der Werkstücke deutlich vergleichmäßigt wird und dadurch eine geringe Reibung beim Transport der Werkstücke erzielbar ist. Andererseits treten hier aber wiederum dieselben Probleme auf, wenn Werkstücke mit deutlich größerem oder deutlich kleinerem Durchmesser transportiert werden sollen.

Ausgehend hiervon stellt die Erfindung darauf ab, ein System mit einer Transportvorrichtung der eingangs genannte Art vorzuschlagen, bei der die Zuführung der Werkstücke in die Aufnahmen des Zahnriemens besonders einfach und unkompliziert möglich ist und bei der ein Zahnriemen einen größeren Durchmesserbereich an Werkstücken transportieren kann. Außerdem soll der bauliche Aufwand für die neue Transportvorrichtung gering sein.

Erfindungsgemäß wird dies bei einem System mit einer Transportvorrichtung der eingangs genannten Art dadurch erreicht, daß jede Aufnahme zwischen zwei vom Zahnriemen vorspringenden Formzähnen mit einem Querschnitt derart ausgebildet ist, daß das eingelegte Werkstück in der Aufnahme nur an den beiden Seitenflanken der die Aufnahme begrenzenden Formzähne anliegt, und daß an einer Umlenkstelle der dort unter Aufweitung der Aufnahmen zwischen den Formzähnen umlaufende Zahnriemen der Zuführstelle so zugeordnet ist, daß dort jeweils ein Werkstück in eine aufgeweitete Aufnahme axial von einer Längsseite des Zahnriemens her eingeschoben wird, ohne daß es dabei gegen die Seitenflanken der die Aufnahme begrenzenden Formzähne zur Anlage kommt.

Bei der Erfindung ist durch Ausbildung jeder Aufnahme als konkaver Zwischenraum zwischen zwei von dem Zahnriemen vorspringenden Formzähnen ein Zustand erreicht, der beim Umlaufen eines Zahnriemens um eine Umlenkstelle (etwa in Form eines Umlenkrades) herum dazu führt, daß infolge der dort bogenförmigen Transportrichtung der Zahnriemen gekrümmt wird und die auf seiner Vorderseite angeordneten Formzähne im gekrümmten Abschnitt nicht mehr parallel zueinander verlaufen, sondern in einem spitzen Winkel zueinander aufspreizen. Dadurch werden auch die zwischen den Formzähnen gebildeten Aufnahmen, ausgehend vom Zahnriemen, nach außen hin verbreitert und gleichermaßen vergrößert sich auch der Abstand zwischen den beiden Seitenflanken, die jeweils eine Aufnahme seitlich begrenzen. Hat der Zahnriemen nun aber den gekrümmten Abschnitt um die Umlenkstelle herum verlassen, bilden sich die Aufspreizungen der Formzähne wieder zurück, weshalb auch jede Aufnahme zwischen zwei Formzähnen wieder in ihre ursprüngliche Normalgröße zurückgeführt wird.

Dieses Verhalten wird nun bei der Erfindung gezielt in Verbindung mit der Anordnung für die Zuführstelle der Werkstücke an die Aufnahmen des Zahnriemens ausgenutzt: Die Zuführstelle wird einer Umlenkstelle so zugeordnet, daß dort die Aufweitung der Aufnahmen zwischen den Vorderzähnen des umlaufenden Zahnriemens ausgenutzt werden kann. Dort wird nämlich in dem gespreizten Zustand der Formzähne und der dadurch erfolgenden Vergrößerung der Aufnahmen jeweils ein Werkstück in eine solchermaßen aufgeweitete Aufnahme eingeführt, und dies nicht etwa radial zur Umlenkung, sondern das Werkstück wird in die aufgeweitete Aufnahme axial von einer der beiden Längsseiten des Zahnriemens her eingeschoben, wobei es in Anlagekontakt mit der bei der Erfindung ebenfalls eingesetzten Führungsschiene für den Transport der Werkstücke steht. Dabei besteht durch die Aufweitung der Aufnahme die Möglichkeit, daß das Werkstück so seitlich in die Aufnahme eingeschoben wird, daß es beim Einschieben nur mit der Führungsschiene in Kontakt steht und zumindest während des Einführungsvorganges nicht in Kontakt mit den beiden Seitenflanken der beiden seitlichen Formzähne gelangt. Damit können die Werkstücke in die Aufnahmen allein unter Überwindung der Reibkraft zwischen ihnen und der Führungsschiene, also mit einem nur sehr geringen Widerstand, eingeschoben werden, was sowohl bezüglich der Geschwindigkeit des Einschiebens, wie auch der Einschiebekraft sehr günstig ist. Wenn das Werkstück dann eingeschoben ist, schaltet der Antrieb der Riemenscheibe um einen Abstand weiter, damit die Zuführeinrichtung ein weiteres Werkstück in die nächste Ausnehmung einlegen kann. Bei diesem Weiterschalten wird, wenn die Zuführeinrichtung geeignet an der Umlenkstelle angeordnet ist, die Möglichkeit geschaffen, daß dabei bereits die geweitete Aufnahme sich wieder verengt und möglicherweise bereits das Werkstück bei dieser Verengung an die beiden Seitenflanken der Formzähne zur Anlage kommt.

Durch das weitere Merkmal der Erfindung, daß nämlich jede Aufnahme mit einem Querschnitt so ausgebildet ist, daß - im nicht aufgeweiteten Zustand - das eingelegte Werkstück nur an den beiden Seitenflanken der Formzähne anliegt (und nicht etwa am Boden der Ausnehmung), wird auch ein rasches seitliches Ergreifen des in die Aufnahme eingelegten Werkstückes durch die Seitenflanken der beiden die Aufnahme begrenzenden Formzähne erreicht, weil diese gerade in ihrem Abschnitt, der vom Zahnriemen weiter wegragt, besonders schnell die Rückbildung der Aufspreizung vollziehen.

Beim Transport der Werkstücke in den Aufnahmen im Bereich zwischen den beiden Umlenkstellen des Zahnriemens werden die Werkstücke in ihrem aus den Aufnahmen nach außen ragenden Mantelbereichen infolge ihrer Anlage gegen die dort vorhandene Führungsschiene durch diese auch geführt und dabei auch in den Aufnahmen gehalten. Infolge der Verwendung einer zu dem Zahnriemen hin gewölbten Führungsschiene, deren Verlauf bevorzugt eine zylindrische Krümmung zeigt, ergibt sich in dem über die gekrümmte Schiene gespannten Zahnriemen eine überall im wesentlichen gleiche Zugkraft für diesen, wodurch die zu transportierenden Werkstücke auch mit einer gleichen Andruckkraft gegen die Führungsschiene gedrückt werden, was eine für alle Werkstücke im wesentlichen einheitliche Reibungskraft ergibt.

Die Transportvorrichtung des erfingungsgemäßen Systems stellt auch eine besonders preiswerte Lösung dar, die sich bedeutend besser warten und einfacher bedienen läßt als die bekannten Lösungen. Dadurch, daß bei der Erfindung beim Einlegen der Werkstücke in die aufgeweiteten Aufnahmen der Riemen vom Werkstück beim Einlegen nicht berührt wird, weil dieses allein an der Führungsschiene anliegend eingeführt werden kann, findet durch den Einlegevorgang keinerlei Abnutzung am Zahnriemen statt. Da das Einschieben der Werkstücke in die Aufnahmen (anders als bei Transportvorrichtungen, bei denen die Werkstücke in die Aufnahmen hineinfallen oder abgeworfen werden) ein mechanisch gesteuerter Vorgang ist, läßt sich bei der Erfindung das Beladen der Aufnahmen durch Werkstücke an der Zuführstelle ganz besonders rasch durchführen, wobei der Einschiebevorgang selbst auch noch mechanisch besonders einfach ausgestaltet ist. Dadurch läßt sich die Transportvorrichtung des erfindungsgemäßen Systems auch mit einer besonders großen Effizienz betreiben.

Bei der Transportvorrichtung des erfingungsgemäßen Systems läßt sich der Zahnriemen mit Werkstücken eines relativ großen Durchmesserbereiches sicher betreiben: Da die Aufnahmen in ihrer Formgestaltung nicht einer ganz bestimmten Durchmessergröße angepaßt sind, ist schon insoweit gegenüber bekannten Transportvorrichtungen, bei denen die Aufnahme an eine bestimmte Größe eines Werkstückdurchmesser angepaßt ist, eine deutliche Verbesserung zu erzielen. Durch die Verwendung der Führungsschiene als Abstützelement für die nach außen überstehenden Mantelbereiche der zu transportierenden Werkstücke ist auch die Möglichkeit eines Betriebes gegeben, bei dem der Überstand relativ groß ist, weil durch die Abstützung an der Führungsschiene ein Herausfallen aus der Aufnahme nicht möglich ist.

Der Querschnitt der Aufnahmen kann bei der Transportvorrichtung des erfingungsgemäßen Systems in jeder geeigneten Form gewählt werden, welche die nur zweiseitige Abstützung der Werkstücke beim Transport gestattet. Besonders bevorzugt wird der Querschnitt der Aufnahmen im nicht-aufgeweiteten Zustand derselben (und in einer Ebene senkrecht zur äußeren Umlaufebene des Zahnriemens gesehen) V-förmig oder trapezförmig ausgebildet. Solchermaßen geformte Querschnitte der Aufnahmen eignen sich in einem besonders guten Maße für die erfindungsgemäße Transportvorrichtung.

Vorteilhafterweise wird bei dem erfindungsgemäßen System auch der Abstand zwischen der Führungsschiene und dem ihr zugeordneten Abschnitt des Zahnriemens verstellbar ausgeführt, um besonders rasch eine Anpassung für einen Transport anderer Werkstückdurchmesser Rechnung tragen zu können.

Eine weitere bevorzugte Ausgestaltung der Erfindung besteht auch darin, daß eine oder beide Umlenkstellen der Transportvorrichtung durch jeweils ein Umlenkrad gebildet werden.

Besonders empfehlenswert ist es ferner, wenn bei einem erfindungsgemäßen System die Formzähne aus einem zähelastischen Werkstoff bestehen, der ein gutes Festhalten der in den Aufnahmen sitzenden Werkstücke gewährleistet.

Die Führungsschiene des erfindungsgemäßen Systems kann in jedem Material ausgeführt werden, das sich für den speziellen Einsatzfall, für den sie vorgesehen ist, eignet. Wenn metallische Werkstücke mit der erfindungsgemäßen Transportvorrichtung transportiert werden sollen, ist es aber ganz besonders empfehlenswert, auch eine Führungsschiene aus Metall einzusetzen.

Eine weitere, bevorzugte Ausgestaltung der Erfindung besteht auch darin, daß die in die Aufnahmen eingelegten Werkstücke, im nicht-aufgeweiteten Transportzustand der Aufnahmen, reibschlüssig in ihren jeweiligen Aufnahmen gehalten sind.

Die Erfindung wird nachfolgend anhand der Zeichnungen im Prinzip beispielshalber noch näher erläutert. Es zeigen:
- Fig. 1: eine schematische Seitenansicht eines Abschnitts aus einer Transportvorrichtung eines erfingungsgemäßen Systems;
- Fig. 2: einen vergrößerten Ausschnitt aus Fig. 1 zur Darstellung der der Zuführstelle für die Werkstücke zugeordneten Umlenkstelle für den Zahnriemen und
- Fig. 3: eine perspektivische Darstellung des in Fig. 2 gezeigten Ausschnittes einer Transportvorrichtung eines erfingungsgemäßen Systems, wobei hier jedoch nur ein an der Zuführstelle eingestecktes Werkstück, nach dessen Abschneiden von einem Zufuhrstrang, dargestellt ist.

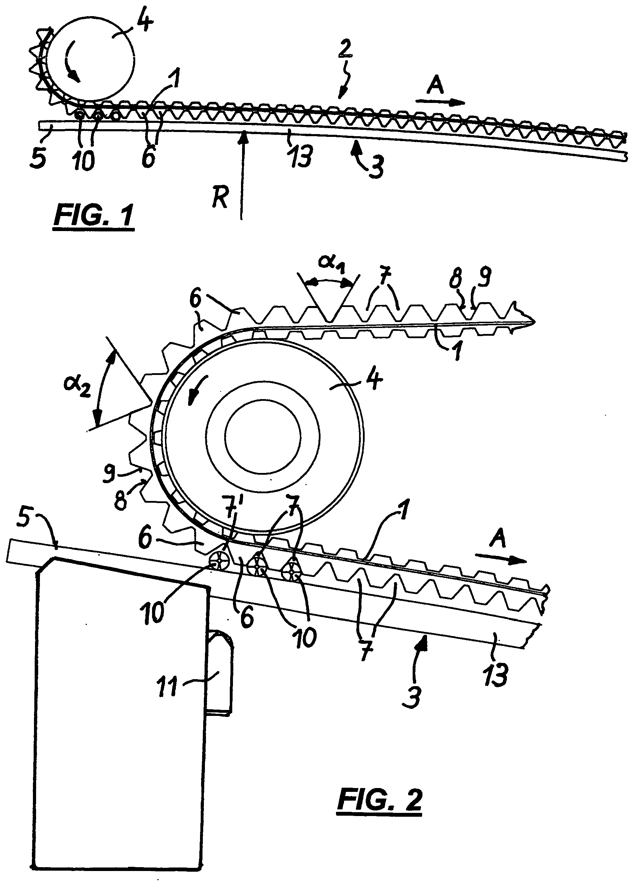

In Fig. 1 ist ganz prinzipiell ein Ausschnitt aus einer Transportvorrichtung für längliche Werkstücke, wie z. B. Nagelrohlinge, Rohrabschnitte, Bolzen, Stifte o. ä. dargestellt, wobei die Vorrichtung einen endlosen Zahnriemen 1 mit einem längeren, nahezu geradlinig verlaufenden Trum 2 aufweist, längs dessen die Transportfunktion erfüllt wird.

Diesem Trum 2 ist eine über dessen Erstreckung hinweg verlaufende Führungsschiene 3 zugeordnet, die eine gewisse, wenn auch geringe Wölbung (Wölbungsradius ***R*)** in Richtung auf den Zahnriemen 1 hin besitzt.

Der Zahnriemen 1 ist an dem in Fig. 1 linken Ende um eine Umlenkscheibe, das seinerseits intermittierend angetrieben wird, wobei in der zeichnerischen Darstellung der Fig. 1 nur ein gewisser Bogenabschnitt des Zahnriemens 1 um das Umlenkrad 4 herum gezeigt ist.

An dieser Seite ist die Führungsleiste 3 etwas über die Lage des Umlenkrades 4 hinaus mit einem Endbereich 5 verlängert.

Es wird nunmehr Bezug genommen auf die Fig. 2, die einen vergrößerten Ausschnitt aus Fig. 1 zeigt, und zwar den Bereich um das Umlenkrad 4 herum.

Die Transportrichtung des Zahnriemens 1 ist in den Figuren mit Pfeilen angegeben, desgleichen die Drehrichtung des Umlenkrades 4.

Der Zahnriemen 1 ist auf seiner dem Umlenkrad 4 abgewandten Außenseite mit Formzähnen 6 versehen, wobei jeweils zwei Formzähne 6 zwischen sich eine Ausnehmung 7 ausbilden, die (vgl. Fig. 2) vorne und hinten durch die Seitenflanken 8 und 9 der beiden anliegenden Formzähne 6 begrenzt ist.

Die Ausnehmungen 7 haben bei der in den Figuren gezeigten Ausbildung einen Querschnitt (gesehen in der senkrecht zum Zahnriemen 1 ausgerichteten Längsmittelebene desselben), der trapezförmig gestaltet ist. Anstelle dieser Gestaltung könnte aber auch jede andere geeignete Gestaltung eingesetzt werden, so z. B. ein dreieckförmiger Querschnitt.

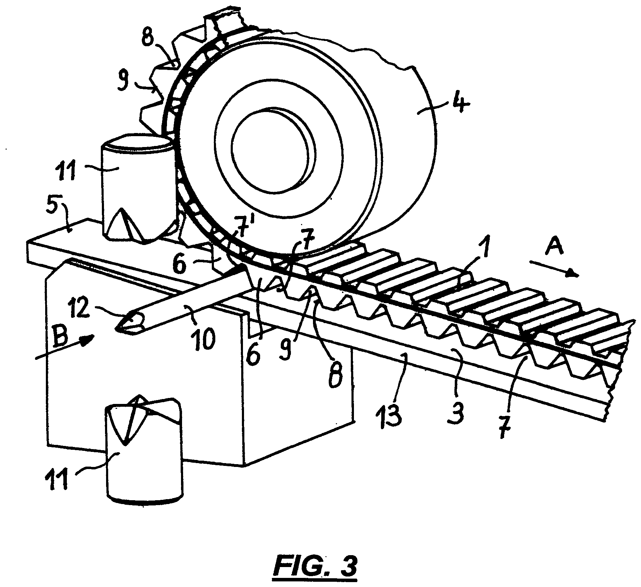

Wie insbesondere die Fig. 2 und 3 gut zeigen, werden die Formzähne 6 beim Umlauf um die Umlenkrolle 4 auseinander gespreizt, wobei der zwischen den Seitenflanken 8 und 9 im nichtausgespreizten Zustand eingeschlossene Winkel ***α₁*** sich im aufgespreizten Zustand auf ***α₂*** vergrößert. So beträgt im gezeigten Ausführungsbeispiel der Winkel ***α₁*** 56°, während der (aufgespreizte) Winkel ***α₂*** einem Wert von 75° entspricht.

Kurz bevor der Umlauf des Zahnriemens 1 um die Umlenkrolle 4 herum beendet ist, also (in Bewegungsrichtung ***A*** des Zahnriemens 1 gesehen) dort, wo die Aufnahmen 7 noch aufgeweitet sind, wird in die jeweilige noch gespreizte Aufnahme 7', die sich - wie die Fig. 2 und 3 zeigen - schon der Führungsschiene 3 wieder genähert hat, ein Werkstück 10, unter 90° quer zur Längsrichtung des Zahnriemens 1, eingesteckt, und zwar so, daß dieses Werkstück 10 die Seitenflanken 8, 9 der diese Ausnehmung 7' begrenzenden Formzähne 6 nicht berührt.

Die Aufnahme 7' (was gleichermaßen für alle Aufnahmen 7 gilt) hat eine Formgebung derart, daß das eingeschobene Werkstück 10 auch in der weiteren Folge der Bewegung der Zahnstange 1 dort, wo die Aufweitung der Aufnahmen 7 beendet ist, nur an den beiden Seitenflanken 8 und 9 der betreffenden Aufnahme 7 anliegt, im übrigen mit einem Bereich seiner Mantelfläche jeweils aus der betreffenden Aufnahme 7 nach außen, d. h. in Richtung auf die Führungsschiene 3, übersteht und im vorstehenden Endabschnitt bei der Bewegung des Zahnriemens 1 auf dieser gleitet. Dies zeigen in Fig. 2 die in den beiden Aufnahmen 7, welche in Transportrichtung ***A*** des Zahnriemens 1 der Aufnahme 7' vorausgehen, bereits angebrachten und dort nunmehr ohne Spiel zwischen den Seitenflanken 8, 9 jeweils festgehaltenen Werkstücke 10.

Das Einschieben der Werkstücke 10 in die jeweilige Aufnahme 7' erfolgt in axialer Richtung des betreffenden Werkstückes 10, senkrecht zur Transportrichtung des Zahnriemens 1, von einer der beiden Längsseiten 13 desselben, wie dies am besten aus Fig. 3 entnehmbar ist.

Dabei wird zunächst ein (in der Figur nicht dargestellter) kontinuierlicher Materialstrang, etwa ein Draht, in Richtung ***B*** (vgl. Fig. 3) angefördert und durch die Aufnahme 7' hindurchgesteckt, bis er auf der gegenüberliegenden Seite des Zahnriemens 1 wieder um ein gewisses Stück aus der Aufnahme 7' ausgetreten ist. Da bei dieser Operation der Materialstrang in seiner Lage geführt ist, kann er so in die Aufnahme 7' eingesteckt werden, daß er die beiden Seitenflanken 8 und 9 der sie (in Transportrichtung ***A*** gesehen) begrenzenden Formzähne 6 nicht berührt. Das Einschieben kann zudem so erfolgen, daß der Werkstoffstrang beim Einschieben auch nicht die Oberseite der Führungsschiene 3 berührt. Das Einführen kann aber auch so erfolgen, daß dabei der Werkstoffstrang mit der Oberseite der Führungsschiene 3 in Kontakt gelangt.

Ist der Werkstoffstrang dann soweit durchgesteckt, erfolgt zuführseitig das Abschneiden dieses Werkstückes 10 von dem Werkstoffstrang durch zwei gegenläufig operierende Schneidmesser 11, die so gestaltet sind, daß beim Abschneiden auch gleichzeitig eine Werkzeugspitze 12 am Werkstück 10 ausgebildet wird.

Fig. 3 zeigt den Zustand direkt nach erfolgtem Abschneiden des Werkstückes 10. Bis zu dem Zeitpunkt, zu dem der Schneidevorgang abgeschlossen ist, wird der Zahnriemen 1 nicht bewegt.

Nach erfolgtem Schneidevorgang wird der Zahnriemen 1 um eine Taktung des intermittierenden Antriebs weiter in Transportrichtung ***A*** befördert. Dabei schließt sich, wie aus Fig. 2 ersichtlich, die vordem beim Einschieben noch aufgeweitete Aufnahme 7', d. h. sie geht in ihren nicht aufgeweiteten Zustand zurück, wobei der im aufgeweiteten Zustand vorhandene Winkel ***α₂*** sich wieder auf den Winkel ***α₁*** zurückbildet.

Bei dieser Verengung der Aufnahme 7' in deren nicht-aufgeweitete Form wird das vordem eingelegte Werkstück 10 von den Seitenflanken 8 und 9 der beiden die betreffende Aufnahme 7 einschließenden Formzähne 6 seitlich so erfaßt, daß es jeweils an den beiden Seitenflanken 8 und 9, sonst aber nirgendwo in der Aufnahme 7, anliegt. Da bei dem Vorwärtsschieben in Transportrichtung ***A*** die Werkstücke 10 bereits auf der Gleitfläche der Führungsschiene 3 anliegen, ist nach Rückbildung der Aufnahme 7' in ihre nicht mehr aufgeweitete Form das Werkstück 10 nunmehr von den beiden Seitenflanken 8 und 9 sowie von der Führungsschiene 3 abgestützt.

Auf diese Weise werden die Werkstücke 10 über das Trum 2 der Transporteinrichtung entlang der Führungsschiene 13 bis zu einer anderen (in den Figuren nicht mehr gezeigten) Umlenkstelle des Zahnriemens 1 geführt, bei dem erneut im Umlenkbereich eine Spreizung der Formzähne 6 und damit eine Aufweitung der Aufnahmen 7 eintritt, die es dort ermöglicht, die angeförderten Werkstücke 10 wieder aus den Aufnahmen 7 in geeigneter Weise entnehmen zu können, z. B. sie herausfallen zu lassen.

In den Fig. 1 bis 3 ist eine im wesentlichen waagerecht verlaufende Transportstrecke des Zahnriemens 1 dargestellt. Es versteht sich von selbst, daß gleichermaßen aber auch eine andere Ausrichtung des Zahnriemens 1 eingesetzt werden könnte, z. B. eine senkrecht von der Umlenkrolle 4 nach oben fördernde Anordnung; auch andere Anordnungen sind denkbar.

In dem in den Figuren dargestellten Ausführungsbeispiel handelt es sich bei den zu transportierenden Werkstücken 10 um Metall-Nägel (vgl. Fig. 3). In diesem Fall besteht die Führungsschiene 3 ebenfalls aus Metall. Wenn man die Gleitfläche der Führungsschiene 3 besonders bearbeitet, also insbesondere durch eine geeignete Bearbeitung für sehr geringe Oberflächenrauhigkeiten sorgt, kann die zwischen der Führungsschiene 3 und den Nägeln 10 beim Transport auftretende Reibkraft außerordentlich gering gehalten werden.

Im Falle anderer Werkstücke, etwa von länglichen Werkstücken aus Kunststoff, kann es aber auch angebracht sein, die Führungsschiene 3 ihrerseits aus einem geeigneten Kunststoff auszubilden, der zu möglichst geringen Reibkräften führt.

Dadurch, daß die Führungsschiene 13 eine bevorzugt zylindrische Krümmung in Richtung auf den Zahnriemen 1 hin aufweist, und zwar über ihre gesamte Länge zwischen den beiden Umlenkstellen hinweg, kann eine sehr gleichmäßige Spannung im Zahnriemen 1 längs dessen Trums 2 geschaffen werden, die auch für einen gleichmäßigen Andruck der dort in den Aufnahmen 7 enthaltenen Werkstücke 10 gegen die Gleitfläche der Führungsschiene 3 sorgt. Dies ist im Hinblick auf geringe Reibkräfte sowie auf das Verschleißverhalten entlang der Führungsschiene 3 besonders günstig.

Es empfiehlt sich, die Formzähne 6 aus einem elastischen Werkstoff auszubilden, wobei die Verwendung eines zähelastischen Werkstoffes besonders bevorzugt ist.

Dadurch, daß beim seitlichen Einführen der Werkstücke 10 in die Aufnahmen 7 an der Zuführstelle beim Einschiebevorgang keine Berührung zwischen dem Werkstück 10 und den beiden die betreffende Aufnahme 7' begrenzenden Formzähnen 6 stattfindet, sondern das Werkstück 10 erst beim nachfolgenden Transport des Zahnriemens 1 beim Verkleinern des Winkels zwischen den Seitenflanken 8 und 9 dieser beiden Formzähne 6 ergriffen wird, tritt beim Einführen des Werkstückes 10 auch keinerlei Reibkraft zwischen diesem und den beiden Formzähnen 6 und damit auch kein Abrieb auf, was ebenfalls einen großen Vorteil gegenüber anderen Lösungen darstellt.

Je nach Formgebung der Aufnahmen 7 und des Durchmessers des aufgenommenen Werkstückes 10 kann dieses im nicht-aufgeweiteten Zustand der Aufnahme 7 durch die Reibkräfte an den beiden Stellen der Berührung mit den Seitenflanken 8 und 9 sogar reibschlüssig innerhalb der jeweils aufnehmenden Ausnehmung 7 gehalten werden.

## Patentansprüche

1. System aus einer Transportvorrichtung und aus quer zu deren Längsrichtung zu überführenden vereinzelten länglichen Werkstücken mit einem Durchmesser aus einem vorgegebenen Durchmesserbereich, mit einem angetriebenen, über mindestens zwei Umlenkstellen (4) laufenden und auf seiner die Werkstücke (10) aufnehmenden Außenseite konkave Aufnahmen (7, 7') für jeweils ein Werkstück (10) aufweisenden endlosen Zahnriemen (1), und mit einer Zuführstelle, an der jeweils ein Werkstück in eine Aufnahme (7') eingeführt wird, wobei jedes in einer Aufnahme (7, 7') angebrachte Werkstück (10) mit einem Bereich seiner Mantelfläche radial über die Aufnahme (7, 7') übersteht, ***dadurch gekennzeichnet*, daß** in einem Abstand von den Zahnriemen (1) eine zwischen den Umlenkstellen (4) verlaufende Führungsschiene (3) angeordnet ist, die zu den Aufnahmen (7, 7') im Zahnriemen (1) hin vorgewölbt ist und auf der die in den Aufnahmen (7, 7') enthaltenen Werkstücke jeweils an ihrem über die Aufnahme (7) radial überstehenden Bereich gleitend anliegen, wobei der Zuführstelle der an einer Umlenkstelle (4) dort unter Aufweitung der Aufnahmen (7') zwischen den Formzähnen (6) umlaufende Zahnriemen (1) so zugeordnet ist, daß jeweils ein Werkstück (10) in eine aufgeweitete Aufnahme (7') axial von einer Längsseite (13) des Zahnriemens (1) her eingeschoben wird, ohne daß es beim Einschieben gegen die Seitenflanken (8, 9) der die Aufnahme (7') begrenzenden Formzähne (6) zur Anlage kommt, und daß jede Aufnahme (7, 7') zwischen zwei aufeinanderfolgenden vom Zahnriemen (1) vorspringenden Formzähnen (6) mit einem Querschnitt derart ausgebildet ist, daß das eingelegte Werkstück (10) in der Aufnahme (7, 7') nur an den beiden Seitenflanken (8, 9) der die Aufnahme (7, 7') begrenzenden Formzähne (6) und nicht am Boden der Aufnahme (7, 7') anliegt.

2. System nach Anspruch 1, **dadurch gekennzeichnet, daß** der Querschnitt der Aufnahmen (7) im nicht-aufgeweiteten Zustand derselben V-förmig oder trapezförmig ausgebildet ist.

3. System nach Anspruch 1 oder 2, **dadurch gekennzeichnet, daß** der Abstand zwischen der Führungsschiene (3) und dem ihr zugeordneten Abschnitt des Zahnriemens (1) verstellbar ist.

4. System nach einem der Ansprüche 1 bis 3, **dadurch gekennzeichnet, daß** eine oder beide Umlenkstellen (4) durch jeweils ein Umlenkrad gebildet werden.

5. System nach einem der Ansprüche 1 bis 4, **dadurch gekennzeichnet, daß** die Formzähne (6) aus einem zähelastischen Werkstoff bestehen.

6. System nach einem der Ansprüche 1 bis 5, **dadurch gekennzeichnet, daß** beim Transport metallischer Werkstücke (10) eine Führungsschiene (3) aus Metall eingesetzt wird.

7. System nach einem der Ansprüche 1 bis 6, **dadurch gekennzeichnet, daß** die in die Aufnahmen (7, 7') eingelegten Werkstücke (10), im nicht-aufgeweiteten Transportzustand der Aufnahmen (7), reibschlüssig in ihren jeweiligen Aufnahmen (7) gehalten sind.

8. System nach einem der Ansprüche 1 bis 7, **dadurch gekennzeichnet, daß** am Zahnriemen (1) die Formzähne (6) zueinander um 5,5 mm oder um ein ganzzahliges Vielfaches hiervon versetzt angebracht sind.

## Claims

1. System made up of a transporting apparatus and of separate elongate workpieces which are to be transferred transversely to the longitudinal direction of the transporting apparatus and have a diameter from a predetermined diameter range, having a driven, endless toothed belt (1) which runs via at least two deflecting locations (4) and has concave holders (7, 7') for a respective workpiece (10) on its outer side, which accommodates the workpieces (10), and having a feed location, at which a respective workpiece is introduced into a holder (7'), wherein each workpiece (10) fitted in a holder (7, 7') has a region of its lateral surface projecting radially beyond the holder (7, 7'), **characterized in that** spaced apart from the toothed belt (1) is a guide rail (3) which runs between the deflecting locations (4), is curved in the direction of the holders (7, 7') in the toothed belt (1) and on which the workpieces contained in the holders (7, 7') each butt with sliding action along their region which projects radially beyond the holder (7), wherein the toothed belt (1), which circulates at a deflecting location (4) with the holders (7') between the shaped teeth (6) widening in the process, is assigned to the feed location such that a respective workpiece (10) is pushed into a widened holder (7') axially from a longitudinal side (13) of the toothed belt (1) without it coming into abutment, as it is pushed in, against the side flanks (8, 9) of the shaped teeth (6), which bound the holder (7'), and that each holder (7, 7') is formed between two successive shaped teeth (6) which project from the toothed belt (1) and have a cross section such that, in the holder (7, 7'), the workpiece (10) introduced butts just against the two side flanks (8, 9) of the shaped teeth (6), which bound the holder (7, 7'), and not against the base of the holder (7, 7').

2. System according to Claim 1, **characterized in that** the cross section of the holders (7) in the non-widened state of the same is V-shaped or trapezoidal.

3. System according to Claim 1 or 2, **characterized in that** it is possible to adjust the distance between the guide rail (3) and that portion of the toothed belt (1) which is assigned to it.

4. System according to one of Claims 1 to 3, **characterized in that** one or both deflecting locations (4) is or are formed by a respective deflecting wheel.

5. System according to one of Claims 1 to 4, **characterized in that** the shaped teeth (6) consist of a tough and resilient material.

6. System according to one of Claims 1 to 5, **characterized in that** a guide rail (3) made of metal is used for transporting metallic workpieces (10) .

7. System according to one of Claims 1 to 6, **characterized in that**, in the non-widened, transport state of the holders (7), the workpieces (10) introduced into the holders (7, 7') are retained with a friction fit in their respective holders (7).

8. System according to one of Claims 1 to 7, **characterized in that** the shaped teeth (6) are fitted on the toothed belt (1) in a state in which they are offset in relation to one another by 5.5 mm or by a whole-numbered multiple thereof.

## Revendications

1. Système formé d'un dispositif de transport et de pièces allongées isolées qui ont un diamètre situé dans une gamme de diamètres prédéterminée et qui doivent être transférées transversalement à la direction longitudinale du dispositif de transport, le système comprenant au moins une courroie crantée sans fin (1) entraînée, circulant sur au moins deux points de déviation (4) et comportant, sur son côté extérieur recevant les pièces (10), des logements concaves (7, 7') destinés chacun à une pièce (10) et un point d'alimentation au niveau duquel une pièce est insérée dans un logement (7'), chaque pièce (10) placée dans un logement (7, 7) faisant saillie par une zone de sa surface latérale radialement au-delà du logement (7, 7'), **caractérisé en ce qu'**un rail de guidage (3), qui s'étend entre les points de déviation (4), qui est incurvé en direction des logements (7, 7') ménagés dans la courroie crantée (1) et sur lequel les pièces contenues dans les logements (7, 7') sont en appui de manière glissante sur leur zone saillant radialement au-delà du logement (7), est disposé à distance de courroie crantée (1),
le point d'alimentation étant associé à la courroie crantée (1) circulant au niveau du point de déviation (4) où les logements (7') s'élargissent entre les dents de formage (6) de telle sorte qu'une pièce (10) soit insérée dans un logement élargi (7') axialement depuis un côté longitudinal (13) de la courroie crantée (1) sans venir en appui lors de l'insertion contre les flancs latéraux (8, 9) des dents de formage (6) délimitant le logement (7'), et de telle sorte que chaque logement (7, 7') soit formé entre deux dents de formage consécutives (6), saillant de la courroie crantée (1), avec une section transversale telle que la pièce insérée (10) dans le logement (7, 7') est en appui uniquement sur les deux flancs latéraux (8, 9) des dents de formage (6) délimitant le logement (7, 7') et non sur le fond du logement (7, 7').

2. Système selon la revendication 1, **caractérisé en ce que** la section transversale des logements (7) est conçue pour être, à l'état non élargi, en forme de V ou en forme de trapèze.

3. Système selon la revendication 1 ou 2, **caractérisé en ce que** la distance entre le rail de guidage (3) et la partie de la courroie crantée (1) qui lui est associée est réglable.

4. Système selon l'une des revendications 1 à 3, **caractérisé en ce que** l'un des points de déviation (4), ou les deux, est/sont formé(s) par une roue de déviation respective.

5. Système selon l'une des revendications 1 à 4, **caractérisé en ce que** les dents de formage (6) sont en un matériau viscoélastique.

6. Système selon l'une des revendications 1 à 5, **caractérisé en ce qu'**un rail de guidage (3) en métal est utilisé lors du transport de pièces métalliques (10).

7. Système selon l'une des revendications 1 à 6, **caractérisé en ce que** les pièces (10), insérées dans les logements (7, 7'), sont maintenues dans l'état de transport non-élargi des récipients (7), par friction dans leurs logements respectifs (7).

8. Système selon l'une des revendications 1 à 7, **caractérisé en ce que** les dents de formage (6) sont décalées les unes des autres, au niveau de la courroie crantée (1), de 5,5 mm ou d'un multiple entier.
